# FASCICULE DE BREVET EUROPEEN

(11) **EP 4 095 820 B1**
(45) Date de publication et mention de la délivrance du brevet: **20.08.2025**
(21) Numéro de dépôt: 22175303.1
(22) Date de dépôt: 25.05.2022
(51) Int. Cl.: G08B 25/14, G08B 29/18, H02J 9/06

(54) **CENTRALE D'ALARME ET SYSTÈME D'ALARME DOMESTIQUE COMPORTANT UN DISPOSITIF D'ALIMENTATION ÉLECTRIQUE**
ALARMZENTRALE UND HAUSALARMSYSTEM MIT EINER STROMVESORGUNGSVORRICHTUNG
ALARM UNIT AND HOME ALARM SYSTEM COMPRISING AN ELECTRIC POWER SUPPLY DEVICE

(30) Priorité: 26.05.2021 FR 2105474
(43) Date de publication de la demande: 30.11.2022
(73) Titulaire: Somfy Activites SA, 74300 Cluses (FR)
(72) Inventeur: NIECERON, Franck, 74300 CLUSES (FR); GUINEHUT, David, 74300 CLUSES (FR); FOURNIOLS, Jean-Yves, 74300 CLUSES (FR)
(74) Mandataire: Lavoix

(56) Documents cités:
- WO-A1-2017/165844
- US-A1- 2016 247 369

## Description

La présente invention concerne une alarme domestique comportant un dispositif d'alimentation électrique, ainsi qu'un procédé de gestion de l'alimentation électrique.

Les systèmes d'alarme domestique permettent d'assurer la surveillance et la protection de bâtiments contre les intrusions. Typiquement, dans de tels systèmes, une centrale qui renferme un système de contrôle électronique est en communication avec des capteurs de surveillance répartis dans le bâtiment, tels que des capteurs de présence ou de mouvement et/ou des capteurs détectant l'état d'un ouvrant tel qu'une porte ou une fenêtre, afin de détecter une activité non autorisée dans le bâtiment.

Il existe des alarmes domestiques qui comportent plusieurs sources d'alimentation électrique pouvant être utilisées en alternance pour fournir l'énergie électrique nécessaire au fonctionnement du système d'alarme.

Par exemple une batterie peut être utilisée en conjonction avec une alimentation électrique provenant d'un réseau de distribution d'électricité (ou secteur).

Cela permet qu'en cas de perte d'alimentation électrique, par exemple suite à une perte de l'alimentation secteur à cause d'une panne ou d'un sabotage, le système d'alarme puisse continuer à fonctionner au moins temporairement afin de pouvoir émettre un signal d'alarme ou un message d'alarme pour prévenir un utilisateur. Inversement, l'alimentation secteur permet de fonctionner la plupart du temps sans trop pénaliser la charge restante dans la batterie et y compris si la batterie n'est plus fonctionnelle.

US5804891A, ou WO 2017/165844 A1 décrivent chacun une alarme comportant des batteries d'accumulateurs. En cas de perte de l'alimentation secteur, et tant qu'aucune alarme n'est émise, les batteries sont connectées en parallèle, pour drainer les batteries simultanément et ainsi prolonger leur durée de vie. Si une alarme est déclenchée, les batteries sont connectées en série pour fournir un maximum d'énergie électrique afin d'alimenter un annonciateur sonore ou lumineux.

Un problème se pose dans le cas où le système subit une coupure secteur de longue durée. En effet, les batteries sont spécifiées pour permettre un fonctionnement hors secteur sur une période de 24h, mais aucune solution n'est prévue pour une durée d'alimentation de secours sur plusieurs jours d'affilée.

Une coupure d'alimentation secteur pendant plus de 24h va conduire à une déplétion prématurée de la ou des batteries, au risque que ces dernières se retrouvent prématurément vidées et soient incapables d'alimenter électriquement le système d'alarme.

US 2016/0247369 A1 décrit, quant à lui, un système d'alarme avec au moins une connexion au secteur et des sources de secours comprenant au moins une première batterie et une deuxième batterie.

Il existe donc un besoin pour un système d'alarme domestique comportant dispositif d'alimentation électrique capable d'utiliser une pluralité de sources d'alimentation électrique afin de fournir une alimentation de secours lors d'une perte de l'alimentation électrique principale de longue durée, en remédiant aux inconvénients précités.

À cet effet, l'invention concerne une centrale d'alarme selon la revendication 1. Selon des aspects avantageux mais non obligatoires de l'invention :
- le dispositif d'alimentation est configuré pour, en cas de défaillance de la première source d'alimentation électrique, sélectionner d'abord la troisième source d'alimentation électrique puis, si la défaillance d'alimentation électrique de la première source d'alimentation a une durée supérieure ou égale à une limite prédéfinie ou si la capacité de la troisième source d'alimentation tombe en dessous d'un seuil prédéfini, sélectionner comme source d'alimentation de secours la deuxième source d'alimentation électrique ;
- la deuxième source d'alimentation électrique comporte des accumulateurs électrochimiques non rechargeables tels que des piles alcalines et en ce que la troisième source d'alimentation électrique comporte des accumulateurs électrochimiques rechargeables, telle qu'une batterie lithium-polymère ;
- le premier module de sélection et le deuxième module de sélection du dispositif d'alimentation permettent de sélectionner, parmi les sources d'alimentation électriques, une source d'alimentation qui alimente électriquement le premier rail d'alimentation ou le deuxième rail d'alimentation (66), au moyen d'un interrupteur de puissance ;
- le dispositif d'alimentation est configuré pour donner la priorité à la première source d'alimentation électrique lorsque celle-ci est fonctionnelle, en particulier le dispositif d'alimentation comprend un circuit de gestion d'alimentation comprenant un composant électronique dédié qui permet de donner la priorité à la première source d'alimentation ;
- un module de communication radio configuré pour assurer une liaison par un réseau de téléphonie mobile est connecté au deuxième rail d'alimentation ;
- la centrale d'alarme est configurée pour, en cas de détection d'une défaillance de la première source d'alimentation électrique, envoyer un message d'alarme, au moyen d'un module de communication radio pour prévenir un utilisateur de la survenue d'une défaillance ;
- la centrale d'alarme est configurée pour ne plus fonctionner en mode alimentation de secours en cas de perte secteur si la deuxième source d'alimentation est insuffisante et ce même si la troisième source d'alimentation est fonctionnelle ;
- le dispositif électronique de commande sélectionne un mode de fonctionnement, parmi un mode de fonctionnement normal, un premier mode de fonctionnement dégradé et un deuxième mode de fonctionnement dégradé, adapté à la sélection de la première, deuxième ou troisième source d'alimentation ;
- dans le premier mode d'alimentation dégradé, une sélection de fonctions essentielles de communication ou de surveillance est opérée parmi les fonctions de communication ou de surveillance et seules ces fonctions essentielles de communication et de surveillance sélectionnées sont assurées, et dans le deuxième mode d'alimentation dégradé, une sélection de fonctions essentielles de surveillance est opérée parmi les fonctions de surveillance et seules les fonctions essentielles de surveillance sélectionnées sont assurées ;
- la centrale d'alarme comprend une unité de communication comprenant plusieurs modules de communication radio permettant d'émettre des signaux selon plusieurs protocoles différents.

Selon un autre aspect, le système d'alarme domestique comporte une centrale d'alarme, au moins un capteur et au moins un avertisseur, ledit au moins un capteur et ledit au moins un avertisseur étant connectés à la centrale d'alarme, dans lequel la centrale d'alarme est conforme à l'invention.

Selon un autre aspect, le procédé comporte des étapes consistant à :
- démarrer la centrale d'alarme en utilisant la première source d'alimentation électrique comme source d'alimentation électrique ;
- détecter une perte d'alimentation électrique sur la première source d'alimentation électrique ;
- sélectionner la deuxième source d'alimentation électrique ou la troisième source d'alimentation électrique comme source d'alimentation électrique de secours, en fonction des besoins en énergie requis pour assurer le fonctionnement de la centrale d'alarme.

Selon un autre aspect, le procédé comprend une étape consistant à sélectionner un mode de fonctionnement normal ou dégradé en fonction de la sélection de la source d'alimentation électrique.

L'invention sera mieux comprises et d'autres avantages de celle-ci apparaîtront plus clairement à la lumière de la description qui va suivre d'un mode de réalisation d'un dispositif d'alimentation électrique pour un système d'alarme domestique, donnée uniquement à titre d'exemple et faite en référence aux dessins annexés, dans lesquels :
- [Fig 1] La figure 1 est un schéma synoptique simplifié d'un système d'alarme domestique conforme à un mode de réalisation de l'invention ;
- [Fig 2] la figure 2 est un schéma synoptique d'une centrale d'alarme appartenant au système d'alarme de la figure 1 ;
- [Fig 3] la figure 3 est un schéma synoptique d'un dispositif d'alimentation électrique assurant l'alimentation de la centrale d'alarme de la figure 2, et
- [Fig 4] la figure 4 est un ordinogramme simplifié d'un procédé de sélection d'une source électrique, mis en œuvre par la centrale d'alarme de la figure 2 en conjonction avec le dispositif d'alimentation électrique de la figure 3.

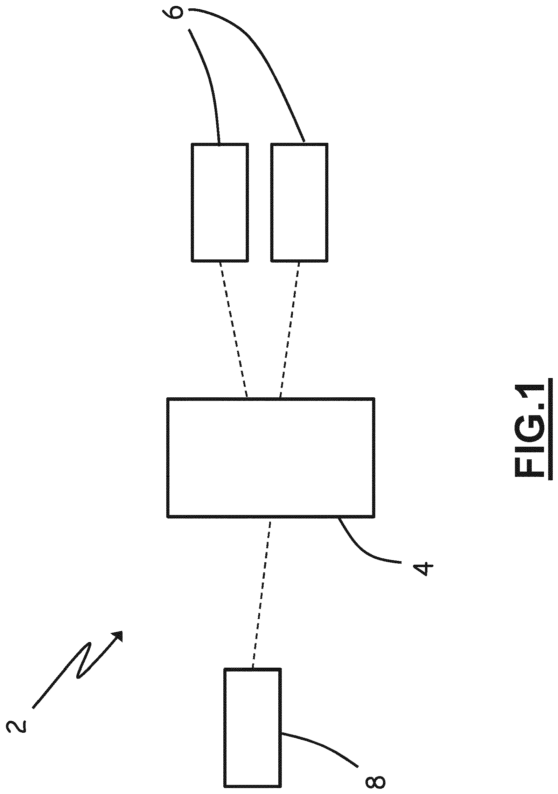

La figure 1 représente un exemple d'un système d'alarme 2 comportant une centrale d'alarme 4 connectée à une pluralité de capteurs de surveillance 6 et à un annonciateur 8, ou avertisseur.

Par exemple, le système d'alarme 2, aussi appelé « alarme » dans ce qui suit, est destiné à être placé dans un bâtiment, notamment un bâtiment à usage résidentiel ou commercial, afin de détecter des intrusions ou des activités non autorisées dans le bâtiment.

La centrale d'alarme 4, aussi nommée unité centrale, et qui sera décrite plus en détail dans ce qui suit, comporte un dispositif électronique de commande configuré pour superviser le fonctionnement du système d'alarme 2 et pour communiquer des informations, notamment des information d'alarme, à des dispositifs extérieurs au bâtiment.

Les capteurs de surveillance 6 sont par exemple des capteurs de présence ou de mouvement et/ou des capteurs détectant l'état d'un ouvrant tel qu'une porte ou une fenêtre.

Les capteurs de surveillance 6 sont de préférence répartis dans le bâtiment afin de détecter une activité non autorisée dans le bâtiment.

L'annonciateur 8 est configuré pour émettre un signal d'alarme perceptible par un ou plusieurs utilisateurs, tel qu'un signal d'alarme sonore ou un signal d'alarme visuel. Par exemple, l'annonciateur 8 comporte un haut-parleur capable d'émettre un signal sonore tel qu'une sirène d'alerte. En variante, l'annonciateur 8 peut comporter une source lumineuse, telle qu'une lampe clignotante.

En pratique, le nombre de capteurs de surveillance 6 et d'annonciateurs 8 peut être différent.

Certains annonciateurs 8, voire tous les annonciateurs 8, peuvent être incorporés dans la centrale 4.

Par exemple, lorsqu'une activité anormale est détectée par un ou par plusieurs capteurs de surveillance 6, la centrale 4 déclenche une alarme et envoie un signal d'alarme au moyen d'un ou de plusieurs des annonciateurs 8.

La centrale 4 peut aussi, dans certaines variantes, envoyer un message d'alarme au moyen d'une unité de communication, à destination d'un appareil récepteur distant extérieur au bâtiment.

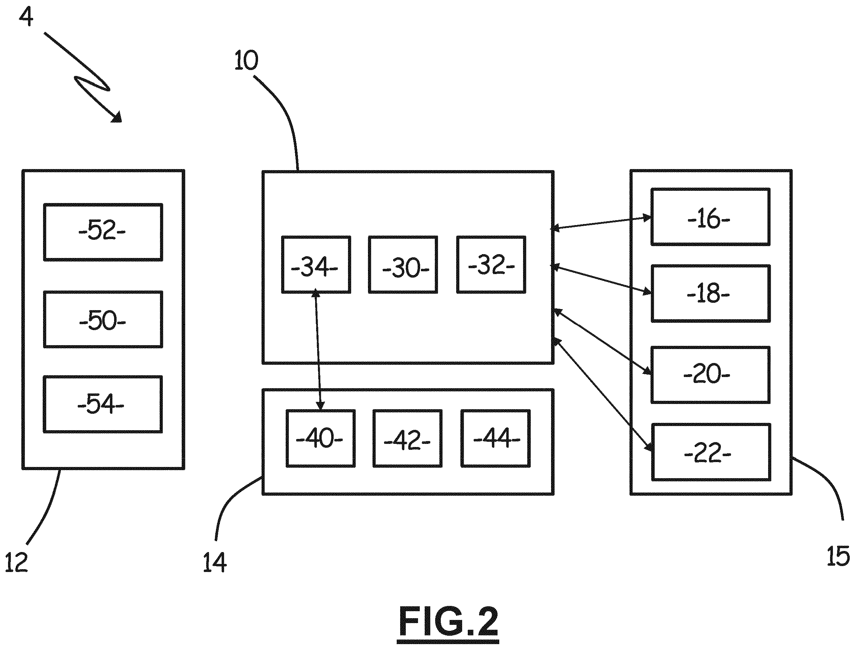

La figure 2 représente un exemple d'une centrale d'alarme 4.

La centrale d'alarme 4 comporte un dispositif électronique de commande 10 et un dispositif d'alimentation électrique 12 configuré pour alimenter électriquement la centrale d'alarme.

Dans l'exemple illustré, la centrale d'alarme 4 comporte également un panneau de commande 14, une unité de communication 15 comprenant des modules de communication radio 16, 18, 20 et une interface de communication avec un système domotique 22.

De préférence, le dispositif électronique de commande 10 comporte un processeur 30, tel qu'un microcontrôleur, de la mémoire 32, de préférence de la mémoire non-volatile, et une interface 34 de communication avec le panneau de commande 14.

Le processeur 30 est couplé à la mémoire 32, ou à tout support d'enregistrement de données lisible par ordinateur, qui comporte des instructions exécutables et/ou un code logiciel prévu pour mettre en œuvre un procédé de gestion de l'alimentation électrique, par exemple comme décrit ci-après, lorsque ces instructions et/ou le code logiciel sont exécutés par le processeur.

L'emploi du terme « processeur » ne fait pas obstacle à ce que, en variante, au moins une partie des fonctions du dispositif électronique de commande 10 soient réalisées par d'autres composants électroniques, tels qu'un processeur de traitement du signal (DSP), ou un composant logique reprogrammable (FPGA), ou un circuit intégré spécialisé (ASIC), ou tout élément équivalent, ou toute combinaison de ces éléments.

Le panneau de commande 14 comporte des éléments d'interface homme-machine permettant à un utilisateur d'interagir avec la centrale d'alarme 4, notamment pour communiquer des instructions à la centrale d'alarme 4 ou pour voir un affichage d'un ou de plusieurs états internes de la centrale d'alarme 4. Par exemple, le panneau de commande 14 comporte des témoins lumineux 40, tels que des diodes électroluminescentes (LED), un écran d'affichage 42 et/ou des boutons 44.

L'unité de communication, comprenant par exemple les modules de communication radio 16, 18, 20, permet à la centrale 4 de communiquer avec les capteurs de surveillance 6 du bâtiment et/ou avec un ou plusieurs appareils distants.

Les modules de communication radio 16, 18, 20 peuvent être de différents types.

Par exemple, le premier module de communication radio 16 permet à la centrale 4 d'échanger des données avec les capteurs de surveillance 6 répartis dans le bâtiment, par exemple sur des bandes de fréquences inférieures au Gigahertz.

En variante, le premier module de communication radio 16 pourrait être compatible avec d'autres protocoles radio, fonctionnant à dans des bandes de fréquence plus élevées, de l'ordre de quelques GigaHertz, par exemple à 2,4 GHz, tel que le protocole Zigbee (marque déposée).

Le deuxième module de communication radio 18 permet de communiquer avec un appareil réseau afin d'échanger des données avec un appareil distant tel qu'un serveur informatique distant ou un appareil tel qu'une passerelle, connecté à internet ou à un réseau local.

Par exemple, le deuxième module de communication radio 18 est compatible avec un protocole de communications radio à courte portée, tel que le protocole Bluetooth (marque déposée).

En variante, le deuxième module de communication radio 18 peut comporter un module WiFi, par exemple compatible avec le standard IEEE 802.11 b/g/n, ce module WiFi étant configuré pour communiquer avec un appareil réseau par une liaison locale ou par un réseau public tel qu'internet.

Le troisième module de communication radio 20 est une liaison de secours permettant à la centrale 4 d'envoyer un message d'alarme à destination d'un appareil distant en cas de défaillance des autres liaisons de communication radio.

Par exemple, le troisième module de communication radio 20 utilise un réseau de téléphonie mobile, tel qu'un réseau GSM ou LTE.

En pratique, les modules de communication radio 16, 18, 20 peuvent comporter chacune une antenne radio et un circuit d'émission/réception, voire d'un contrôleur électronique, tel qu'un contrôleur réseau. Chacun de ces modules de communication permet d'émettre des signaux suivant un protocole qui lui est propre.

Dans des modes de réalisation alternatifs, certains des modules de communication radio 16, 18, 20 pourraient être omis.

L'unité de communication 15 permet de connecter optionnellement la centrale d'alarme 4 à un système domotique équipant le bâtiment, tel qu'un système domotique utilisant un protocole propriétaire ou tout autre protocole équivalent. Ainsi, la centrale d'alarme 4 peut recevoir des instructions venant du système domotique ou envoyer des informations au système domotique. Le système domotique peut par exemple comprendre des actionneurs électromécaniques pilotant des dispositifs mobiles, tels que des volets roulants, des portes ou portails, des serrures.

De nombreux autres modes de réalisation sont possibles en variante.

Le nombre de modules de communication ainsi que leur nature pourraient être choisis différemment dans des modes de réalisation alternatifs.

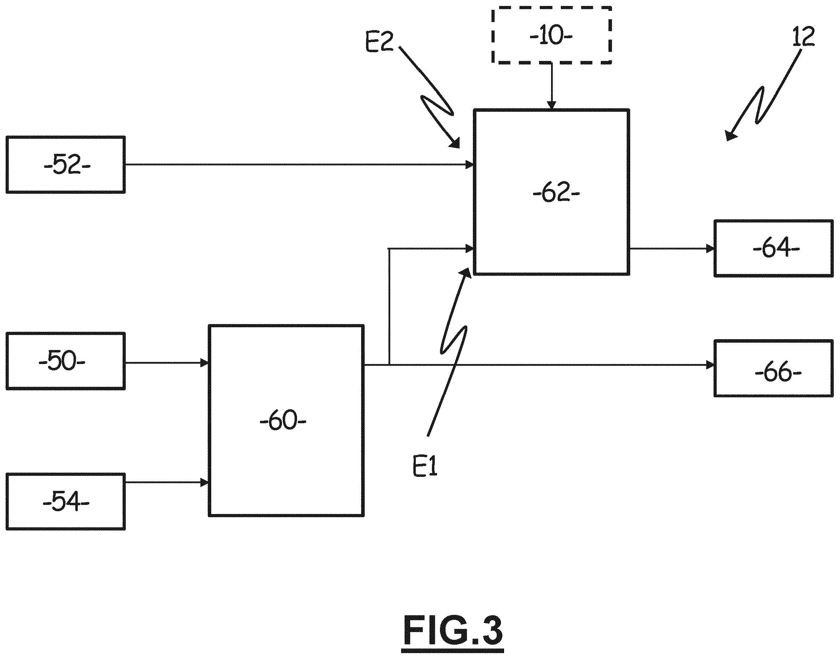

Comme illustré sur les figures 2 et 3, le dispositif d'alimentation électrique 12 comporte une première source d'alimentation électrique 50, une deuxième source d'alimentation électrique 52 et une troisième source d'alimentation électrique 54.

Le dispositif d'alimentation électrique 12 comporte également un premier module de sélection 60 et un deuxième module de sélection 62 qui permettent de sélectionner, par exemple au moyen d'un ou de plusieurs interrupteurs de puissance, parmi les sources d'alimentation électriques 50, 52 et 54, une source d'alimentation qui alimente électriquement un premier rail d'alimentation 64 (« Buck 3,3 V ») ou un deuxième rail d'alimentation 66 (« Buck 3,8 V ») du dispositif d'alimentation électrique 12.

Par exemple, tout ou partie des composants de la centrale d'alarme 4 est alimenté électriquement par l'un ou par l'autre du premier rail d'alimentation 64 ou du deuxième rail d'alimentation 66.

De préférence, certains composants de la centrale d'alarme 4 assurant des fonctions essentielles sont connectés au premier rail d'alimentation 64.

Dans l'exemple illustré, la première source d'alimentation électrique 50 correspond à un réseau de distribution électrique, aussi nommé « secteur ».

Selon des exemples, il peut s'agir d'un réseau de distribution public, ou d'une source d'alimentation locale, telle qu'un panneau photovoltaïque, ou d'une alimentation fournie par un réseau de communication, par exemple du type « power over Ethernet » (PoE).

La première source d'alimentation, du fait de son lien avec un réseau de distribution électrique, est généralement disponible en continu. Une défaillance dans ce réseau de distribution peut toutefois entraîner une interruption de disponibilité de la première source d'alimentation.

Par exemple, la première source d'alimentation électrique 50, dite source principale, comporte un convertisseur de puissance (non illustré) configuré pour convertir une tension d'entrée alternative en une tension continue.

Dans le mode de réalisation illustré, la tension d'entrée est une tension réseau alternative d'amplitude comprise entre 100 et 240 V avec une fréquence de 50 Hz ou de 60 Hz, en une tension électrique continue de 5 Volts et de 3 ampères maximum, ces valeurs étant données à titre d'exemple illustratif et non limitatif.

De préférence, la source principale tient lieu d'alimentation préférée pour alimenter la centrale 4 dans des conditions de fonctionnement normales, c'est-à-dire si la tension et le courant associés de la source principale sont disponibles pour l'alimentation de la centrale 4.

La deuxième source d'alimentation électrique 52, dite première source de secours, est de préférence adaptée pour alimenter électriquement la centrale 4 en cas de défaillance de la source principale, notamment lors d'une défaillance longue.

Par exemple, la deuxième source 52 comporte un dispositif de stockage d'électricité tel que des batteries d'accumulateurs électrochimiques, et de préférence une ou plusieurs piles électriques, notamment des piles alcalines.

De préférence, ce premier dispositif de stockage d'électricité est configuré pour présenter, en l'absence d'utilisation, un niveau de charge élevé pendant une longue durée, par exemple pendant plusieurs semaines ou pendant plusieurs mois.

Dans l'exemple illustré, la deuxième source 52 comprend quatre piles alcalines de type « LR20 », ici chacune capable de fournir une tension électrique de 1,5 Volts, cette valeur étant donnée à titre d'exemple illustratif et non limitatif.

La deuxième source d'alimentation électrique 52, dite source de secours, est de préférence adaptée pour alimenter électriquement la centrale 4 en cas de défaillance de la source principale.

La troisième source d'alimentation électrique 54, dite deuxième source de secours, est de préférence adaptée pour alimenter électriquement la centrale 4 en cas de défaillance de la source principale, de préférence lors d'une défaillance de courte durée, à la place de la deuxième source 52. Selon un mode de réalisation préférentiel, elle est non-rechargeable.

De préférence, ce deuxième dispositif de stockage d'électricité est différent du premier dispositif de stockage. Le deuxième dispositif de stockage d'électricité peut avoir une capacité de stockage moindre que celle du premier dispositif de stockage d'électricité.

Par exemple, la troisième source 54 comporte un dispositif de stockage d'électricité, pouvant être rechargeable, tel qu'un condensateur, supercondensateur ou un accumulateur rechargeable, par exemple une batterie rechargeable de faible capacité.

Dans l'exemple illustré, la troisième source 54 comprend une batterie lithium-polymère (« LiPo ») rechargeable, avec par exemple une capacité de 1,9 Ah, cette valeur étant donnée à titre d'exemple illustratif et non limitatif.

Avantageusement, le troisième dispositif de stockage est rechargé par le biais de la première source d'alimentation électrique 50.

Deux entrées du premier module de sélection 60 sont respectivement connectées à la première source 50 et à la troisième source 54. Une sortie du premier module de sélection 60 est connectée au deuxième rail d'alimentation 66 ainsi qu'à une première entrée E1 du deuxième module de sélection 62.

Le deuxième module de sélection 62 comporte, outre la première entrée E1, une deuxième entrée E2 qui est connectée à la deuxième source d'alimentation 52. Une sortie du deuxième module de sélection 62 est connectée au premier rail d'alimentation 64.

Cette configuration permet avantageusement au système de sélectionner en priorité la première source d'alimentation 50 lorsque celle-ci est fonctionnelle, notamment pour éviter qu'en cas de dysfonctionnement du système, on ne bascule sur la deuxième source d'alimentation 52 ou la troisième source d'alimentation 54 (les batteries ou les piles). On peut recharger les batteries, mais les consommateurs ne peuvent pas puiser l'énergie sur une autre source que le secteur s'il est présent.

Lorsque l'alimentation secteur est rétablie après une interruption, le système d'alimentation rebascule automatiquement sur la première source d'alimentation 50 sans avoir besoin de vérifier systématiquement la présence ou non du secteur (c'est-à-dire sans avoir besoin de vérifier constamment si la première source d'alimentation est à nouveau opérationnelle, ceci contrairement à l'art antérieur US5804891 précité où un bloc 24 « *Input power good sense »* teste de manière systématique l'état adéquat ou non de l'alimentation secteur).

De façon générale, le dispositif d'alimentation 12 (voire aussi la centrale d'alarme 4) est configuré pour, en cas de défaillance de l'alimentation électrique principale, sélectionner une source d'alimentation de secours pour temporairement alimenter la centrale d'alarme 4.

En d'autres termes, le dispositif d'alimentation 12 peut fonctionner selon un mode d'alimentation électrique normal, dans lequel la centrale d'alarme 4 est alimentée électriquement par la première source d'alimentation 50 (alimentation secteur), et un ou plusieurs modes d'alimentation électrique dégradés (ou modes d'alimentation de secours), dans lesquels la centrale d'alarme 4 est temporairement, au moins en partie, alimentée électriquement par la deuxième ou la troisième source d'alimentation 52 ou 54. En particulier, le dispositif électronique de commande sélectionne un mode de fonctionnement, parmi le mode de fonctionnement normal, le premier mode de fonctionnement dégradé et le deuxième mode de fonctionnement dégradé, adapté à la sélection de la première, deuxième ou troisième source d'alimentation.

De préférence, c'est l'indisponibilité ou la défaillance de la première source d'alimentation 50 qui va mettre automatiquement en œuvre la sélection de ces modes de fonctionnement dégradés. La sélection peut résulter de l'architecture des modules de sélection, ou être réalisée de façon logicielle, ou par une combinaison de moyens logiciels et matériels.

La deuxième ou la troisième source d'alimentation 52 ou 54 tient alors lieu d'alimentation de secours, pour assurer certaines fonctions essentielles, telles que des fonctions essentielles de communication et/ou des fonctions essentielles de surveillance et d'alarme.

Les fonctions essentielles de communication peuvent par exemple inclure l'envoi d'un message radio d'alerte à un utilisateur, par l'une des interfaces de communication radio 16, 18, 20 ou par tout autre moyen, pour prévenir l'utilisateur de la survenue d'une défaillance.

Les fonctions essentielles de surveillance et d'alarme peuvent comporter la surveillance du bâtiment à l'aide des capteurs de surveillance 6 et l'activation de l'annonciateur 8 pour envoyer un signal d'alerte si une intrusion ou une anomalie est détectée.

La sélection d'une source parmi la deuxième et la troisième source d'électricité 52, 54 (et donc d'un mode d'alimentation dégradé plutôt qu'un mode normal) est effectuée en fonction des besoins en énergie requis pour assurer le fonctionnement de la centrale d'alarme 4, par exemple pour assurer au moins certaines fonctions essentielles de la centrale d'alarme 4.

Par exemple, le dispositif d'alimentation 12 peut alternativement mettre en œuvre un premier mode d'alimentation dégradé, dans lequel une sélection de fonctions essentielles de communication ou de surveillance est opérée parmi les fonctions de communication ou de surveillance et dans lequel seules ces fonctions essentielles de communication et de surveillance sélectionnées sont assurées, et un deuxième mode d'alimentation dégradé dans lequel une sélection de fonctions essentielles de surveillance est opérée parmi les fonctions de surveillance et dans lequel seules les fonctions essentielles de surveillance sélectionnées sont assurées.

En pratique, la sélection de fonctions essentielles de communication peut consister en la sélection d'un ou plusieurs modules de communication, les autres étant rendus inopérants. Ainsi, les modules de communication radio 16, 18, 20 peuvent être alimentés différemment selon leur degré d'importance lorsque la centrale d'alarme 4 fonctionne dans un mode dégradé après la perte de l'alimentation électrique.

Par exemple, le deuxième module de communication radio 18, qui comporte un module WiFi ou Bluetooth, peut n'être utilisée que lorsque la centrale 4 est alimentée par le secteur (c'est-à-dire dans le mode d'alimentation normal), du fait que ce module de communication nécessite une quantité d'énergie importante pour fonctionner.

Au contraire, le troisième module de communication radio 20 (liaison par téléphonie mobile) peut continuer à être alimentée par la troisième source d'alimentation 54 (dans le premier mode d'alimentation dégradée) et ainsi permettre l'envoi d'un message d'alerte. En revanche, le troisième module de communication radio 20 n'est pas alimenté lorsque la deuxième source d'alimentation 52 est utilisée (dans le deuxième mode d'alimentation dégradée), afin de ne pas décharger prématurément la deuxième source d'alimentation 52.

Par exemple, l'architecture des modules de sélection 60 et 62 a pour but d'éviter en toutes circonstances que la deuxième source d'alimentation 52 (les piles) n'alimente la liaison par téléphonie mobile (qui consomme beaucoup, par rapport à la fonction alarme ou la communication locale). Au contraire, on privilégie la troisième source d'alimentation 54 hors secteur pour l'alimentation du troisième module de communication radio 20.

En pratique, le troisième module de communication radio 20 (le module assurant la liaison par téléphonie mobile) est connecté au deuxième rail d'alimentation 66 pour être alimenté par ce deuxième rail d'alimentation 66. Le troisième module de communication radio 20 n'est de préférence pas connecté au premier rail d'alimentation 64. Ainsi, lorsque seul le premier rail d'alimentation 64 est alimenté, le troisième module de communication radio 20 n'est pas alimenté.

En pratique, la sélection de fonctions essentielles de surveillance peut consister en la sélection d'un ou plusieurs capteurs de surveillance, les autres étant rendus inopérants.

Cette sélection de fonctions essentielles de communication et/ou de surveillance peut permettre de limiter la consommation d'énergie de la centrale de commande.

De préférence, le dispositif d'alimentation 12 peut être configuré pour sélectionner, comme source d'alimentation électrique de secours, d'abord la troisième source d'alimentation 54 comme source d'alimentation de secours, puis ensuite la deuxième source d'alimentation 52, notamment si la défaillance dure trop longtemps ou si la quantité d'énergie disponible en sortie de la troisième source d'alimentation passe en dessous d'un seuil prédéfini.

En pratique, le basculement depuis la troisième source d'alimentation 54 comme source d'alimentation de secours vers la deuxième source d'alimentation 52 (basculement des batteries vers les piles) s'effectue dès que le niveau de charge des batteries de la deuxième source d'alimentation 52 passe en dessous de 50% de leur capacité.

Ceci permet de conserver de l'énergie dans la troisième source d'alimentation 54 (les batteries) pour l'alimentation uniquement du troisième module de communication radio 20 (alimentation de la fonction de liaison téléphonique mobile) pendant une durée de plusieurs jours, la deuxième source d'alimentation 52 (les piles) alimentant le reste des éléments consommateurs de l'unité 4.

Par exemple, la sélection de la deuxième source d'alimentation 52 comme source d'alimentation de secours peut intervenir automatiquement au bout d'une durée prédéfinie, même si la troisième source d'alimentation 54 n'est pas complètement déchargée. La limite prédéfinie de durée peut être choisie supérieure ou égale à quelques minutes, d'autres valeurs étant cependant possibles en variante.

Autrement dit, la deuxième source d'alimentation 52 n'est utilisée comme source d'alimentation de secours qu'au bout de la durée prédéfinie.

Dans tous les cas, de préférence, les fonctions essentielles de surveillance de la centrale d'alarme 4 sont maintenues quel que soit le mode d'alimentation électrique, afin de toujours être en mesure de détecter une anomalie ou une intrusion et de générer une alerte localement, au moyen d'au moins un annonciateur 8.

Grâce à l'invention, on évite de solliciter systématiquement la deuxième source d'alimentation 52 en cas de coupure d'alimentation réseau de courte durée, car cela conduirait à un déchargement prématuré de la deuxième source d'alimentation 52.

Au contraire, en faisant appel d'abord à la troisième source d'alimentation 54 comme source d'alimentation temporaire, on évite que la deuxième source d'alimentation 52 ne soit déchargée prématurément à cause de coupures de faible durée du réseau électrique.

Dans le cas présent, le premier module de sélection 60 est configuré pour sélectionner en priorité l'alimentation secteur, et donc de privilégier la première source 50, tant que celle-ci fonctionne correctement.

Ainsi, tant qu'aucune défaillance n'est détectée, le premier module de sélection 60 transfère le courant électrique provenant de la première source 50 vers sa sortie, et donc vers la deuxième rail d'alimentation 66 et vers la première entrée du deuxième module de sélection 62.

Lorsqu'une défaillance de l'alimentation principale 50 est détectée, le premier module de sélection 60 transfère le courant électrique provenant de la troisième source 54 vers la sortie, et donc vers le deuxième rail d'alimentation 66 et vers la première entrée du deuxième module de sélection 62.

Le deuxième module de sélection 62 est quant à lui configuré pour choisir laquelle des deux sources 52 ou 54 utiliser pour alimenter le rail d'alimentation principal 64, c'est-à-dire choisir laquelle des deux entrées E1 ou E2 utiliser pour alimenter le premier rail d'alimentation 64 connectée en sortie du deuxième module de sélection 62.

Cette sélection peut être faite en fonction des besoins exprimés par le dispositif électronique de commande 10 pour alimenter certaines fonctions essentielles de la centrale d'alarme 4, comme expliqué ci-dessus.

Plusieurs stratégies de commande sont donc possibles, ces stratégies pouvant être définies par un utilisateur et programmées dans le dispositif de commande 10.

De préférence, le deuxième module de sélection 62 est configuré pour privilégier par défaut la source connectée sur la première entrée E1, qu'il s'agisse de la première source 50 (lorsqu'elle fonctionne normalement) ou de la troisième source 54 (en cas de défaillance de la première source 50).

En cas de perte d'alimentation sur la première entrée E1, par exemple parce que la troisième source 54 s'est déchargée et que l'alimentation secteur 50 n'a pas été rétablie, ou bien au bout d'une durée dépassant un seul prédéterminé, le deuxième module de sélection 62 est configuré pour changer d'alimentation et utiliser, comme alimentation de secours, la deuxième source d'alimentation 52 connectée sur la deuxième entrée E2, à la place de celle connectée sur la première entrée E1.

Par exemple, chaque module de sélection 60, 62, ou au moins l'un des modules de sélection 60, 62 comporte un interrupteur de puissance, tel qu'un transistor ou un relais, ou tout élément équivalent, qui permet de mettre en communication l'une des entrées avec la sortie dudit module de sélection. L'interrupteur de puissance peut être piloté par le dispositif électronique de commande 10.

En variante, l'interrupteur de puissance pourrait être piloté localement par un contrôleur électronique embarqué comportant des moyens de mesure pour détecter l'état de chaque entrée, par exemple pour mesurer la tension électrique à chaque entrée.

Dans le mode de réalisation illustré sur la figure 3, le deuxième module de sélection 62 comporte un interrupteur de puissance tel que décrit ci-dessus, de préférence piloté par le dispositif électronique de commande 10, et/ou une diode ou autre composant électronique proche qui donne la priorité au module 60.

Le premier module de sélection 60 comporte un comparateur permettant de sélectionner la source présentant la tension la plus élevée, et/ou un circuit de gestion d'alimentation comprenant un composant électronique dédié tel qu'un multiplexeur de gestion de priorité d'alimentation (*Priority Power multiplexer* en langue anglaise), qui permet de donner la priorité à la source secteur.

De nombreux autres modes de réalisation sont néanmoins possibles.

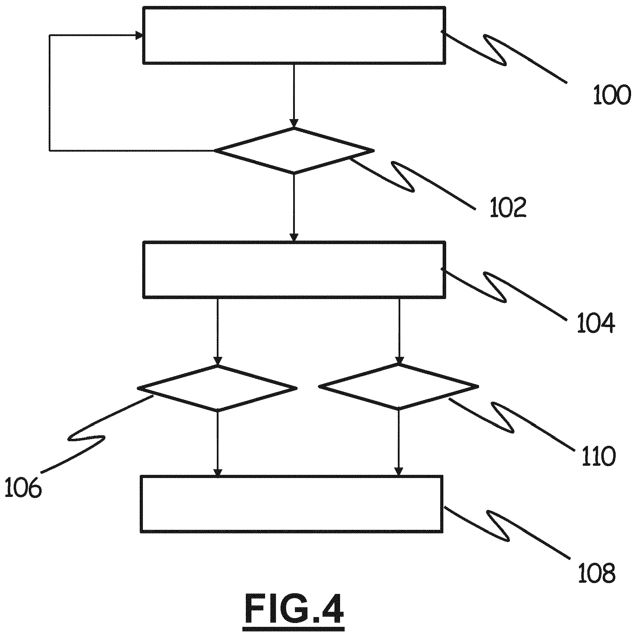

Un exemple de fonctionnement du dispositif d'alimentation électrique 12 est maintenant décrit en référence à la figure 4.

Par exemple, ce procédé est mis en œuvre par le dispositif d'alimentation électrique 12 avec le concours du dispositif électronique de commande 10.

Le procédé débute à l'étape 100, par exemple avec le démarrage (la mise sous tension) de la centrale d'alarme 4.

Lors de l'étape 100, le dispositif d'alimentation électrique 12 sélectionne par défaut la source d'alimentation principale 50 pour alimenter électriquement la centrale d'alarme 4.

Lors d'une étape 102, le dispositif d'alimentation électrique 12 détecte une perte d'alimentation électrique sur la première source d'alimentation 50, par exemple en détectant que des caractéristiques de l'alimentation électrique reçue (telles que l'amplitude de la tension) ne correspondent pas à des valeurs attendues, voire en détectant une perte totale de l'alimentation électrique. Cette détection est par exemple réalisée par des moyens de mesure, tels que des capteurs de tension ou de courant, par exemple présents dans le dispositif d'alimentation électrique 12.

En réponse, lors d'une étape 104, le dispositif d'alimentation électrique 12 sélectionne la deuxième source d'alimentation électrique 52 ou la troisième source d'alimentation électrique 54 comme source d'alimentation électrique de secours, en fonction des besoins en énergie requis pour assurer le fonctionnement de la centrale d'alarme 54.

Par exemple, lors de la perte d'alimentation secteur, le premier module de sélection 60 bascule automatiquement vers la troisième source d'alimentation 54. Le deuxième module de sélection 62 est alors connecté indirectement à la troisième source d'alimentation 54, par sa première entrée E1.

On comprend que, si aucune perte d'alimentation électrique n'est détectée, le dispositif d'alimentation électrique 12 continue d'utiliser la première source 50 comme source d'alimentation privilégiée.

Ensuite, le dispositif d'alimentation électrique 12 peut changer d'alimentation de secours, par exemple parce que les besoins en énergie de la centrale d'alarme 4 ont changé, ou parce que la troisième source d'alimentation 54 est vide, ou parce qu'une durée prédéfinie s'est écoulée depuis la perte d'alimentation principale.

Par exemple, si la troisième source d'alimentation 54 avait été utilisée lors de la perte d'alimentation à l'étape 104 comme alimentation de secours, le dispositif d'alimentation électrique 12 peut alors utiliser, à la place, comme nouvelle alimentation de secours, la deuxième source d'alimentation 52.

Ainsi, lors d'une étape 106, le dispositif électronique de commande 10 vérifie automatiquement si les conditions de choix de la source de secours doivent être revues, par exemple en vérifiant si les besoins en énergie de la centrale d'alarme 4 ont changé, et/ou parce que l'état de charge de l'alimentation de secours utilisée ont changé.

S'il est déterminé que les conditions de choix de la source de secours doivent être revues, alors pendant une étape 108, le dispositif d'alimentation électrique 12 change de mode d'alimentation et utilise comme alimentation de secours l'autre source d'alimentation 52 ou 54. Par exemple, le deuxième module de sélection 62 est commuté pour utiliser la source d'alimentation connectée sur l'autre entrée E1 ou E2.

Par exemple, la centrale d'alarme 4 peut d'abord être basculée dans le premier mode d'alimentation dégradé, afin d'alimenter le module de communication radio 20 le temps d'envoyer un message d'alerte, puis ensuite être placée dans le deuxième mode d'alimentation dégradé une fois que l'interface de communication radio 20 n'a plus besoin d'être alimentée. Cela permet de réduire la consommation d'énergie.

Avantageusement, lors de l'étape 106, le dispositif d'alimentation électrique 12 ou le dispositif électronique de commande 10 peut vérifier que la source d'alimentation de secours 52 ou 54, utilisée comme source d'alimentation de secours temporaire, fonctionne toujours correctement. En cas de décharge ou défaillance de cette source d'alimentation temporaire, le procédé passe directement à l'étape 108 pour changer de source de secours.

Dans certains cas, optionnellement, si la deuxième source d'alimentation 52 est insuffisante, par exemple parce qu'elle est déchargée sous un seuil prédéfini, le dispositif d'alarme peut être prévu pour ne plus fonctionner en mode alimentation de secours en cas de perte secteur, et ce même si la troisième source d'alimentation 54 est fonctionnelle (i.e., même si les batteries sont chargées). Cela permet de contraindre l'utilisateur à changer les piles s'il veut pouvoir bénéficier de l'ensemble des fonctionnalités d'alimentation de secours.

Optionnellement, si la troisième source d'alimentation 54 a été sélectionnée lors de l'étape 102 comme source de secours, alors pendant une étape 110 en parallèle de l'étape 106, le dispositif électronique de commande 10 peut vérifier si la durée de la défaillance de la source principale 50 devient supérieure ou égale à une limite de durée prédéfinie.

Lorsque la durée de la défaillance de la source principale 50 devient supérieure ou égale à une limite de durée prédéfinie, alors la deuxième source d'alimentation 52 est utilisée à la place de la troisième source d'alimentation 54.

On comprend également que, si l'alimentation réseau 50 est restaurée pendant l'exécution du procédé, alors le dispositif d'alimentation électrique 12 sélectionne à nouveau la première source d'alimentation électrique 50 comme seule source d'alimentation électrique pour alimenter la centrale d'alarme 4. Le mode de fonctionnement normal est alors également réinstauré.

En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Les modes de réalisation et les variantes envisagés ci-dessus peuvent être combinés entre eux pour former de nouveaux modes de réalisation.

## Revendications

1. Centrale d'alarme (4) pour un système d'alarme domestique (2), la centrale d'alarme comportant un dispositif électronique de commande (10) et un dispositif d'alimentation électrique (12) configuré pour alimenter électriquement la centrale d'alarme, le dispositif d'alimentation électrique (12) comportant une première source d'alimentation électrique (50), une deuxième source d'alimentation électrique (52) et une troisième source d'alimentation électrique (54), la première source d'alimentation électrique (50) étant configurée pour être raccordée à un réseau électrique, la deuxième source d'alimentation électrique (52) comportant un premier dispositif de stockage d'énergie électrique, la troisième source d'alimentation électrique (54) comportant un deuxième dispositif de stockage d'énergie électrique différent du premier dispositif de stockage d'énergie électrique, le dispositif d'alimentation électrique (12) étant configuré pour, en cas de défaillance de la première source d'alimentation électrique, sélectionner comme source d'alimentation de secours pour temporairement alimenter la centrale d'alarme soit la deuxième source d'alimentation électrique (52) soit la troisième source d'alimentation électrique (54) en fonction des besoins en énergie requis pour assurer le fonctionnement de la centrale d'alarme (4),
**caractérisée en ce que** :
- le dispositif d'alimentation (12) comporte un premier module de sélection (60) et un deuxième module de sélection (62), qui permettent de sélectionner, parmi les sources d'alimentation électriques (50, 52 et 54), une source d'alimentation qui alimente électriquement un premier rail d'alimentation (64) ou un deuxième rail d'alimentation (66),
- deux entrées du premier module de sélection (60) sont respectivement connectées à la première source d'alimentation électrique (50) et à la troisième source d'alimentation électrique (54),
- une sortie du premier module de sélection (60) est connectée au deuxième rail d'alimentation (66) ainsi qu'à une première entrée (E1) du deuxième module de sélection (62),
- le deuxième module de sélection (62) comporte, outre la première entrée (E1), une deuxième entrée (E2) qui est connectée à la deuxième source d'alimentation (52) et
- une sortie du deuxième module de sélection (62) est connectée au premier rail d'alimentation (64).

2. Centrale d'alarme selon la revendication 1, dans laquelle le dispositif d'alimentation (12) est configuré pour, en cas de défaillance de la première source d'alimentation électrique, sélectionner d'abord la troisième source d'alimentation électrique (54) puis, si la défaillance d'alimentation électrique de la première source d'alimentation (50) a une durée supérieure ou égale à une limite prédéfinie ou si la capacité de la troisième source d'alimentation tombe en dessous d'un seuil prédéfini, sélectionner comme source d'alimentation de secours la deuxième source d'alimentation électrique (52).

3. Centrale d'alarme selon l'une quelconque des revendications précédentes, dans laquelle la deuxième source d'alimentation électrique comporte des accumulateurs électrochimiques non rechargeables tels que des piles alcalines et en ce que la troisième source d'alimentation électrique comporte des accumulateurs électrochimiques rechargeables, telle qu'une batterie lithium-polymère.

4. Centrale d'alarme selon l'une quelconque des revendications précédentes, dans laquelle le premier module de sélection (60) et le deuxième module de sélection (62) du dispositif d'alimentation (12) permettent de sélectionner, parmi les sources d'alimentation électriques (50, 52 et 54), une source d'alimentation qui alimente électriquement le premier rail d'alimentation (64) ou le deuxième rail d'alimentation (66), au moyen d'un interrupteur de puissance.

5. Centrale d'alarme selon l'une quelconque des revendications précédentes, dans laquelle le dispositif d'alimentation (12) est configuré pour donner la priorité à la première source d'alimentation électrique (50) lorsque celle-ci est fonctionnelle, en particulier le dispositif d'alimentation comprend un circuit de gestion d'alimentation comprenant un composant électronique dédié qui permet de donner la priorité à la première source d'alimentation (50).

6. Centrale d'alarme selon l'une quelconque des revendications précédentes, dans laquelle un module de communication radio (20) configuré pour assurer une liaison par un réseau de téléphonie mobile est connecté au deuxième rail d'alimentation (66).

7. Centrale d'alarme selon l'une quelconque des revendications précédentes, dans laquelle la centrale d'alarme (4) est configurée pour, en cas de détection d'une défaillance de la première source d'alimentation électrique (50), envoyer un message d'alarme, au moyen d'un module de communication radio (16, 18, 20) pour prévenir un utilisateur de la survenue d'une défaillance.

8. Centrale d'alarme selon la revendication précédente, dans laquelle la centrale d'alarme (4) est configurée pour ne plus fonctionner en mode alimentation de secours en cas de perte secteur si la deuxième source d'alimentation (52) est insuffisante et ce même si la troisième source d'alimentation (54) est fonctionnelle.

9. Centrale d'alarme selon l'une quelconque des revendications précédentes, dans laquelle le dispositif électronique de commande (10) sélectionne un mode de fonctionnement, parmi un mode de fonctionnement normal, un premier mode de fonctionnement dégradé et un deuxième mode de fonctionnement dégradé, adapté à la sélection de la première, deuxième ou troisième source d'alimentation.

10. Centrale d'alarme selon la revendication précédente, dans laquelle, dans le premier mode d'alimentation dégradé, une sélection de fonctions essentielles de communication ou de surveillance est opérée parmi les fonctions de communication ou de surveillance et seules ces fonctions essentielles de communication et de surveillance sélectionnées sont assurées, et dans le deuxième mode d'alimentation dégradé, une sélection de fonctions essentielles de surveillance est opérée parmi les fonctions de surveillance et seules les fonctions essentielles de surveillance sélectionnées sont assurées.

11. Centrale d'alarme selon l'une quelconque des revendications précédentes, comprenant une unité de communication comprenant plusieurs modules de communication radio permettant d'émettre des signaux selon plusieurs protocoles différents.

12. Système d'alarme domestique (2) comportant une centrale d'alarme (4), au moins un capteur (6) et au moins un avertisseur (8), ledit au moins un capteur (6) et ledit au moins un avertisseur (8) étant connectés à la centrale d'alarme, dans lequel la centrale d'alarme (4) est conforme à l'une quelconque des revendications précédentes.

13. Procédé de gestion d'un dispositif d'alimentation électrique (12) d'une centrale d'alarme (4) dans un système d'alarme domestique (2), la centrale d'alarme (4) étant conforme à l'une quelconque des revendications 1 à 10, le procédé comportant des étapes consistant à :
- démarrer (100) la centrale d'alarme (4) en utilisant la première source d'alimentation électrique (50) comme source d'alimentation électrique ;
- détecter (102) une perte d'alimentation électrique sur la première source d'alimentation électrique (50) ;
- sélectionner (104) la deuxième source d'alimentation électrique (52) ou la troisième source d'alimentation électrique (54) comme source d'alimentation électrique de secours, en fonction des besoins en énergie requis pour assurer le fonctionnement de la centrale d'alarme (4).

14. Procédé selon la revendication précédente, comprenant une étape consistant à sélectionner un mode de fonctionnement normal ou dégradé en fonction de la sélection de la source d'alimentation électrique.

## Patentansprüche

1. Alarmzentrale (4) für ein Hausalarmsystem (2), die Alarmzentrale umfassend eine elektronische Steuervorrichtung (10) und eine Stromversorgungsvorrichtung (12) umfasst, die konfiguriert ist, um die Alarmzentrale mit Strom zu versorgen, die Stromversorgungsvorrichtung (12) umfassend eine erste Stromversorgungsquelle (50), eine zweite Stromversorgungsquelle (52) und eine dritte Stromversorgungsquelle (54), wobei die erste Stromversorgungsquelle (50) konfiguriert ist, um an ein Stromnetz angeschlossen zu werden, die zweite Stromversorgungsquelle (52) umfassend eine erste Speichervorrichtung für elektrische Energie, die dritte Stromversorgungsquelle (54) umfassend eine zweite Speichervorrichtung für elektrische Energie, die sich von der ersten Speichervorrichtung für elektrische Energie unterscheidet, wobei die Stromversorgungsvorrichtung (12) konfiguriert ist, um bei einem Ausfall der ersten Stromversorgungsquelle als Notversorgungsquelle zur vorübergehenden Versorgung der Alarmzentrale entweder die zweite Stromversorgungsquelle (52) oder die dritte Stromversorgungsquelle (54) abhängig von dem Bedarf an Energie auszuwählen, die erforderlich ist, um den Betrieb der Alarmzentrale (4) zu gewährleisten,
**dadurch gekennzeichnet, dass**:
- die Versorgungsvorrichtung (12) ein erstes Auswahlmodul (60) und ein zweites Auswahlmodul (62) umfasst, die es ermöglichen, aus den Stromversorgungsquellen (50, 52 und 54) eine Versorgungsquelle auszuwählen, die eine erste Versorgungsschiene (64) oder eine zweite Versorgungsschiene (66) elektrisch versorgt,
- zwei Eingänge des ersten Auswahlmoduls (60) jeweils mit der ersten Stromversorgungsquelle (50) und der dritten Stromversorgungsquelle (54) verbunden sind,
- ein Ausgang des ersten Auswahlmoduls (60) mit der zweiten Versorgungsschiene (66) sowie mit einem ersten Eingang (E1) des zweiten Auswahlmoduls (62) verbunden ist,
- das zweite Auswahlmodul (62) außer dem ersten Eingang (E1) einen zweiten Eingang (E2) umfasst, der mit der zweiten Stromversorgungsquelle (52) verbunden ist, und
- ein Ausgang des zweiten Auswahlmoduls (62) mit der ersten Versorgungsschiene (64) verbunden ist.

2. Alarmzentrale nach Anspruch 1, wobei die Versorgungsvorrichtung (12) konfiguriert ist, um bei einem Ausfall der ersten Stromversorgungsquelle zunächst die dritte Stromversorgungsquelle (54) auszuwählen und dann, wenn der Ausfall der Stromversorgung der ersten Stromversorgungsquelle (50) eine Dauer aufweist, die größer als oder gleich wie ein vordefinierter Grenzwert ist, oder wenn die Kapazität der dritten Versorgungsquelle unter einen vordefinierten Grenzwert fällt, die zweite Stromversorgungsquelle (52) als Notversorgungsquelle auszuwählen.

3. Alarmzentrale nach einem der vorherigen Ansprüche, wobei die zweite Stromversorgungsquelle nicht wiederaufladbare elektrochemische Akkumulatoren wie beispielsweise Alkalibatterien umfasst und dass die dritte Stromquelle wiederaufladbare elektrochemische Akkumulatoren, wie beispielsweise eine Lithium-Polymer-Batterie, umfasst.

4. Alarmzentrale nach einem der vorherigen Ansprüche, wobei das erste Auswahlmodul (60) und das zweite Auswahlmodul (62) der Versorgungsvorrichtung (12) es ermöglichen, unter den Versorgungsquellen (50, 52 und 54) eine Versorgungsquelle auszuwählen, die die erste Versorgungsschiene (64) oder die zweite Versorgungsschiene (66) mittels eines Leistungsschalters elektrisch mit Strom versorgt.

5. Alarmzentrale nach einem der vorherigen Ansprüche, wobei die Versorgungsvorrichtung (12) konfiguriert ist, um der ersten Stromversorgungsquelle (50) Priorität zu geben, wenn diese funktionsfähig ist, wobei insbesondere die Stromversorgungseinrichtung eine Versorgungsmanagementschaltung, umfassend eine dedizierte elektronische Komponente umfasst, die es ermöglicht, der ersten Versorgungsquelle (50) Priorität zu geben.

6. Alarmzentrale nach einem der vorherigen Ansprüche, wobei ein Funkkommunikationsmodul (20), das konfiguriert ist, um eine Verbindung über ein Mobilfunknetz herzustellen, mit der zweiten Versorgungsschiene (66) verbunden ist.

7. Alarmzentrale nach einem der vorherigen Ansprüche, wobei die Alarmzentrale (4) konfiguriert ist, um bei Erkennung eines Ausfalls der ersten Stromversorgungsquelle (50) mittels eines Funkkommunikationsmoduls (16, 18, 20) eine Alarmmeldung zu senden, um einen Benutzer über das Auftreten eines Ausfalls zu informieren.

8. Alarmzentrale nach dem vorherigen Anspruch, wobei die Alarmzentrale (4) konfiguriert ist, um bei einem Netzausfall nicht mehr in einem Notversorgungsmodus betrieben zu werden, wenn die zweite Versorgungsquelle (52) nicht ausreicht, und zwar auch dann, wenn die dritte Versorgungsquelle (54) funktionsfähig ist.

9. Alarmzentrale nach einem der vorherigen Ansprüche, wobei die elektronische Steuervorrichtung (10) eine Betriebsart aus einer normalen Betriebsart, einer ersten verschlechterten Betriebsart und einer zweiten verschlechterten Betriebsart auswählt, die für die Auswahl der ersten, der zweiten oder der dritten Versorgungsquelle geeignet ist.

10. Alarmzentrale nach dem vorherigen Anspruch, wobei in dem ersten verschlechterten Versorgungsmodus eine Auswahl von wesentlichen Kommunikations- oder Überwachungsfunktionen aus den Kommunikations- oder Überwachungsfunktionen getroffen wird und nur diese ausgewählten wesentlichen Kommunikations- und Überwachungsfunktionen bereitgestellt werden, und in dem zweiten verschlechterten Versorgungsmodus eine Auswahl von wesentlichen Überwachungsfunktionen aus den Überwachungsfunktionen getroffen wird und nur die ausgewählten wesentlichen Überwachungsfunktionen bereitgestellt werden.

11. Alarmzentrale nach einem der vorherigen Ansprüche, umfassend eine Kommunikationseinheit, umfassend mehrere Funkkommunikationsmodule, die es ermöglichen, Signale gemäß mehreren verschiedenen Protokollen zu senden.

12. Hausalarmsystem (2), umfassend eine Alarmzentrale (4), mindestens einen Sensor (6) und mindestens einen Signalgeber (8), wobei der mindestens eine Sensor (6) und der mindestens eine Signalgeber (8) mit der Alarmzentrale verbunden sind, wobei die Alarmzentrale (4) einem der vorherigen Ansprüche entspricht.

13. Managementverfahren einer Stromversorgungsvorrichtung (12) einer Alarmzentrale (4) in einem Hausalarmsystem (2), wobei die Alarmzentrale (4) einem der Ansprüche 1 bis 10 entspricht, das Verfahren umfassend die folgenden Schritte:
- Starten (100) der Alarmzentrale (4) unter Verwendung der ersten Stromversorgungsquelle (50) als Stromversorgungsquelle;
- Erfassen (102) eines Stromversorgungsausfalls an der ersten Stromversorgungsquelle (50);
- Auswählen (104) der zweiten Stromversorgungsquelle (52) oder der dritten Stromversorgungsquelle (54) als Notstromversorgungsquelle, je nach dem Bedarf an Energie, die erforderlich ist, um den Betrieb der Alarmzentrale (4) zu gewährleisten.

14. Verfahren nach dem vorherigen Anspruch, umfassend einen Schritt, der aus einem Auswählen eines normalen oder verschlechterten Betriebsmodus abhängig von der Auswahl der Stromversorgungsquelle umfasst.

## Claims

1. Alarm control unit (4) for a domestic alarm system (2), the alarm control unit comprising an electronic control device (10) and a power supply device (12) configured to supply power to the alarm control unit, the power supply device (12) comprising a first electrical power source (50), a second electrical power source (52) and a third electrical power source (54), the first electrical power source (50) being configured to be connected to an electrical network, the second electrical power source (52) comprising a first electrical energy storage device, the third electrical power source (54) comprising a second electrical energy storage device different from the first electrical energy storage device, the electrical power supply device (12) being configured so as, in the event of failure of the first electrical power source, to select as an emergency power source for temporarily powering the alarm control unit either the second electrical power source (52) or the third electrical power source (54) as a function of the energy requirements needed to ensure operation of the alarm control unit (4),
**characterized in that**:
- the supply device (12) comprises a first selection module (60) and a second selection module (62), which make it possible to select, from the electrical power sources (50, 52 and 54), a power source which electrically supplies a first supply rail (64) or a second supply rail (66),
- two inputs of the first selection module (60) are respectively connected to the first electrical power source (50) and to the third electrical power source (54),
- an output of the first selection module (60) is connected to the second supply rail (66) and to a first input (E1) of the second selection module (62),
- the second selection module (62) comprises, in addition to the first input (E1), a second input (E2) which is connected to the second power source (52), and
- an output of the second selection module (62) is connected to the first supply rail (64).

2. The alarm control unit according to claim 1, wherein the power supply device (12) is configured so as, in the event of failure of the first electrical power source, first to select the third electrical power source (54) and then, if the power supply failure of the first electrical power source (50) has a duration greater than or equal to a predefined limit or if the capacity of the third power source (54) falls below a predefined threshold, to select the second power source (52) as the emergency power source.

3. The alarm control unit according to any one of the preceding claims, wherein the second electrical power source comprises non-rechargeable electrochemical accumulators such as alkaline cells and in that the third electrical power source comprises rechargeable electrochemical accumulators, such as a lithium-polymer battery.

4. The alarm control unit according to any one of the preceding claims, wherein the first selection module (60) and the second selection module (62) of the power supply device (12) make it possible to select, from among the electrical power sources (50, 52 and 54), of a power source which electrically supplies the first supply rail (64) or the second supply rail (66), by means of a power switch.

5. The alarm control unit according to any one of the preceding claims, wherein the power supply device (12) is configured to give priority to the first electrical power source (50) when the latter is operational, in particular the power supply device comprises a power supply management circuit comprising a dedicated electronic component which makes it possible to give priority to the first power source (50).

6. The alarm control unit according to any one of the preceding claims, wherein a radio communication module (20) configured to provide a link via a mobile telephony network is connected to the second power supply rail (66).

7. The alarm control unit according to any one of the preceding claims, wherein the alarm control unit (4) is configured so as, in the event of detection of a failure of the first electrical power source (50), to send an alarm message, by means of a radio communication module (16, 18, 20), in order to warn a user of the occurrence of a failure.

8. The alarm control unit according to the preceding claim, wherein the alarm control unit (4) is configured to no longer operate in emergency power mode in the event of a mains outage if the second power source (52) is insufficient, even if the third power source (54) is operational.

9. The alarm control unit according to any one of the preceding claims, wherein the electronic control device (10) selects an operating mode, from among a normal operating mode, a first degraded operating mode and a second degraded operating mode, adapted to the selection of the first, second or third power source.

10. The alarm control unit according to the preceding claim, in which, in the first degraded power supply mode, a selection of essential communication or monitoring functions is made from among the communication or monitoring functions and only these essential selected communication and monitoring functions are provided, and in the second degraded power supply mode, a selection of essential monitoring functions is made from among the monitoring functions and only the essential selected monitoring functions are provided.

11. The alarm control unit according to any one of the preceding claims, comprising a communication unit comprising a plurality of radio communication modules enabling signals to be transmitted according to several different protocols.

12. A domestic alarm system (2) comprising a central alarm unit (4), at least one sensor (6) and at least one warning device (8), said at least one sensor (6) and said at least one warning device (8) being connected to the central alarm unit, wherein the central alarm unit (4) is in accordance with any one of the preceding claims.

13. A method for managing a power supply device (12) of an alarm control unit (4) in a domestic alarm system (2), the alarm control unit (4) being in accordance with any one of claims 1 to 10, the method comprising steps consisting in:
- starting (100) the alarm control unit (4) using the first power source (50) as an electrical power source;
- detecting (102) a loss of electrical power to the first electrical power source (50);
- selecting (104) the second electrical power source (52) or the third electrical power source (54) as an emergency electrical power source, depending on the power requirements for operating the alarm control unit (4).

14. The method according to the preceding claim, comprising a step consisting in selecting a normal or degraded operating mode as a function of the selection of the electrical power source.
